# EUROPÄISCHE PATENTSCHRIFT

(11) **EP 1 559 880 B1**
(45) Veröffentlichungstag und Bekanntmachung des Hinweises auf die Patenterteilung: **23.05.2007**
(21) Anmeldenummer: 05008581.0
(22) Anmeldetag: 13.11.2000
(51) Int. Cl.: F01N 3/08, F01N 3/023, F01N 3/20, F02M 25/07, B01D 53/94

(54) **Vorrichtung zum Reduzieren von schädlichen Bestandteilen im Abgas einer Brennkraftmaschine, insbesondere einer Diesel-Brennkraftmaschinen**
Device and method for reducing harmful components in the exhaust gas of an internal combustion engine, especially a Diesel-internal-combustion engine
Dispositif et méthode servant à limiter la quantité de composants nocifs presents dans les gaz d'échappement d'un moteur à combustion interne, en particulier d'un moteur à combustion interne Diesel

(30) Priorität: 17.11.1999 DE 19955324
(43) Veröffentlichungstag der Anmeldung: 03.08.2005
(62) Teilanmeldung aus: 00124263.5
(73) Patentinhaber: Volkswagen AG, 38436 Wolfsburg (DE)
(72) Erfinder: Engeler, Werner, 38527 Meine (DE); Kahmann, Gerhard, 38302 Wolfenbüttel (DE); Düsterdiek, Thorsten, Dr., 30163 Hannover (DE)
(74) Vertreter: Meyer, Enno

(56) Entgegenhaltungen:
- EP-A- 0 758 713
- EP-A- 1 135 581
- EP-B- 0 931 922
- US-A- 5 412 946
- PATENT ABSTRACTS OF JAPAN Bd. 1997, Nr. 07, 31. Juli 1997 (1997-07-31) & JP 09 088727 A (HINO MOTORS LTD), 31. März 1997 (1997-03-31)
- PATENT ABSTRACTS OF JAPAN Bd. 018, Nr. 314 (M-1621), 15. Juni 1994 (1994-06-15) & JP 06 066208 A (YANMAR DIESEL ENGINE CO LTD), 8. März 1994 (1994-03-08)

## Beschreibung

Die Erfindung betrifft eine Vorrichtung zum Reduzieren von schädlichen Bestandteilen im Abgas einer Brennkraftmaschine, insbesondere einer Diesel-Brennkraftmaschine.

Im Zuge der Entwicklung von Vorrichtungen zum Reduzieren von schädlichen Bestandteilen im Abgas einer Brennkraftmaschine, insbesondere einer Diesel-Brennkraftmaschine, sind bereits eine Vielzahl von Maßnahmen vorgeschlagen und bekannt geworden.

Zur Beseitigung von Partikeln aus dem Abgas einer Diesel-Brennkraftmaschine ist ein Partikelfilter geeignet, der in die Abgasleitung eingebaut wird. Jedoch neigt ein Partikelfilter dazu, sich mit der Zeit zuzusetzen, und er muß daher von Zeit zu Zeit regeneriert werden, was beispielsweise durch ein Frei- bzw. Abbrennen der Partikel am Filter erfolgt. Dazu ist eine Abbrenntemperatur ab etwa 550°C notwendig. Diese Temperaturen werden unter normalen Betriebsbedingungen nicht erreicht.

Um das Abbrennen der Partikel bei niedrigeren Temperaturen zu ermöglichen, ist bereits vorgeschlagen worden, Additive im Abgas zu verwenden, mit denen die Zündtemperatur der Partikel gesenkt werden kann. Allerdings ist eine Senkung der Zündtemperatur der Partikel in den üblichen Temperaturbereich des Partikelfilters im normalen Funktionsbetrieb der Brennkraftmaschine nicht möglich. Ein weiterer Nachteil des plötzlichen Abbrennens der am Partikelfilter gesammelten Parfikel führt auch zu einer starken Beanspruchung des Filtermaterials.

Es ist daher ein kontinuierliches Regenerieren des Partikelfilters durch Abbrennen wünschenswert. Hierzu ist bereits vorgeschlagen worden, dem Partikelfilter in der Abgasleitung einen Oxidationskatalysator vorzuschalten, siehe z. B. EP 0 341 832 B1, der aus dem im Abgas enthaltenen NO → NO₂ produziert, so daß mittels des im NO₂ vorhandenen Sauerstoffs die Partikel im wesentlichen kontinuierlich oxidiert werden. Ein solches System ist unter der Bezeichnung CRT-System (Continuously Regenerating Trap) bekannt. Ein Nachteil dieses Systems ist, das für die Regeneration des Partikelfilters verhältnismäßig große Mengen Stickoxide benötigt werden, die selbst ein Schadstoff sind und gesetzlichen Limitationen unterliegen.

Aus der EP-A-0 758 713 ist eine Abgasreinigungsvorrichtung für eine Dieselbrennkraftmaschine bekannt, bei der in Abgasströmungsrichtung ein Oxidationskatalysator, ein Partikelfilter und ein NOₓ-Speicher nacheinander angeordnet sind.

Ferner zeigt die Druckschrift DE-A-40 07 516 einen Dieselmotor für stationäre Anlagen, dessen Abgasreinigungssystem hinter einer Abgasturbine einen Oxidationskatalysator sowie einen nachfolgenden Partikelfilter aufweist, wobei zur Absenkung der NOₓ-Emission eine geregelte Rückführung von gereinigten und gekühlten Abgasen im gesamten Betriebsbereich des Dieselmotors durchgeführt wird.

Nachteilig bei den bekannten Vorrichtungen ist, daß die Abgasreinigung suboptimal erfolgt.

Der Erfindung liegt die Aufgabe zugrunde, eine Vorrichtung der eingangs angegebenen Art so zu verbessern, so daß bei Gewährleistung einer kontinuierlichen Regeneration des Partikelfilters der Anteil der Stickoxide im Abgas niedrig gehalten werden kann.

Diese Aufgabe wird durch eine Vorrichtung mit den Merkmalen des Anspruchs 1 gelöst. Bevorzugte Ausführungsformen der Erfindung sind Gegenstand der Unteransprüche.

Bei einer erfindungsgemäßen Ausführungsform ist der Reinigungsvorrichtung, bestehend aus Oxidationskatalysator und nachfolgendem Partikelfilter, eine Abgasrückführvorrichtung mit einer die Zylinder der Brennkraftmaschine umgehenden Rückführleitung zugeordnet, wobei zur weiteren Verhinderung der NOₓ-Emission die Vorrichtung einen hinter dem Oxidationskatalysator angeordneten NOₓ-Speicherkatalysator aufweist.

Bevorzugte Ausführungsformen der Erfindung werden nachfolgend anhand der Zeichnungen näher erläutert. Es zeigen
- Fig. 1: eine Brennkraftmaschine mit einer Vorrichtung zum Reduzieren von schädlichen Bestandteilen im Abgas der Brennkraftmaschine in schematischer Darstellung;
- Fig. 2: eine Brennkraftmaschine mit einer Vorrichtung zum Reduzieren von schädlichen Bestandteilen im Abgas der Brennkraftmaschine in abgewandelter Ausgestaltung in schematischer Darstellung;
- Fig. 3: eine Brennkraftmaschine mit einer Vorrichtung zum Reduzieren von schädlichen Bestandteilen im Abgas der Brennkraftmaschine in weiter abgewandelter Ausgestaltung in schematischer Darstellung; und
- Fig. 4: eine Brennkraftmaschine mit einer erfindungsgemäßen Vorrichtung zum Reduzieren von schädlichen Bestandteilen im Abgas der Brennkraftmaschine in schematischer Darstellung;

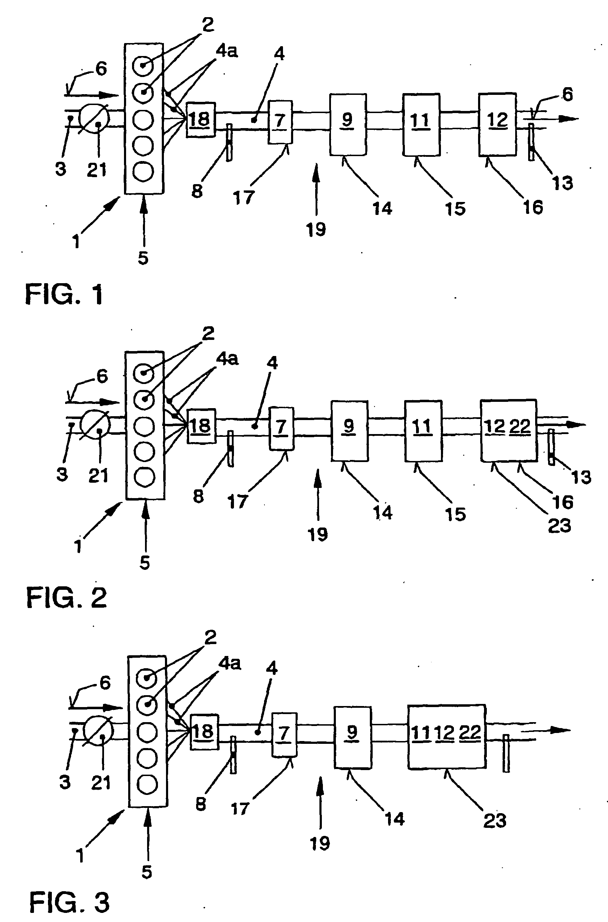

In Fig. 1 ist eine Brennkraftmaschine, insbesondere eine Diesel-Brennkraftmaschine, mit 1 bezeichnet, und sie weist mehrere Zylinder 2 auf, zu denen sich eine Luftansaugleitung 3 und von denen sich eine Abgasleitung 4 in an sich bekannter Weise erstrecken. Der Brennkraftmaschine 1 sind im einzelnen nicht dargestellte Kraftstoff-Einspritzventile einer Kraftstoff-Einspritzvorrichtung 5 zugeordnet Die Zylinder 2 werden durch direkte Einspritzung mit Kraftstoff von den einstellbaren Einspritzventilen und mit Verbrennungsluft durch die in ihrer wirksamen Querschnittsgröße einstellbaren Luftansaugleitung 3 in einem jeweils bestimmten Kraftstoff/Luft-Verhältnis versorgt, wodurch der Verbrennungsbetrieb gewährleistet ist. Die Zylinder 2 der Brennkraftmaschine 1 sind durch Zweigleitungsabschnitte 4a mit der gemeinsamen Abgasleitung 4 verbunden, die von dem von der Brennkraftmaschine 1 ausgestoßenen Abgas in der mit dem Pfeil 6 bezeichneten Strömungsrichtung durchströmt wird.

In der Abgasleitung 4 sind in der Strömungsrichtung 6 hintereinanderliegend eine Schwefelfalle 7, eine den Sauerstoffgehalt ermittelnde Lamda-Sonde 8, ein Oxidationskatalysator 9, ein Partikelfilter 11, ein NOₓ-Speicherkatalysator 12 und ein NOₓ-Sensor 13 angeordnet. Der Oxidationskatalysator 9, der Partikelfilter 11 und der NOₓ-Speicherkatalysator 12 sind jeweils in einem Gehäuse 14, 15, 16 angeordnet, das in seiner Querschnittsabmessung größer bemessen ist, als die Querschnittsabmessung der Abgasleitung 4. Dies gilt vorzugsweise auch für die Schwefelfalle 7, die in einem entsprechenden Gehäuse 17 angeordnet sein kann. Außerdem kann an die Abgasleitung 4 in der Strömungsrichtung 6 vor der Schwefelfalle 7 ein Abgasturbolader 18 angeschlossen sein, wie es vereinfacht dargestellt ist.

Die Lamdasonde 8 und/oder der NOₓ-Sensor 13 ist bzw. sind Teile einer nicht dargestellten Steuer- oder Regeleinrichtung zum Einstellen eines gewünschten Kraftstoff/Luft-Verhältnises λ des zur Brennkraftmaschine gelangenden Kraftstoffgemisches.

Die einzelnen Aggregate bzw. Geräte der Brennkraftmaschine 1 und der insgesamt mit 19 bezeichneten Abgasanlage, die gesteuert werden bzw. eine Meßfunktion ausführen, sind jeweils durch eine Steuerleitung bzw. Signalleitung mit einer elektronischen Steuereinrichtung verbunden, die die Abgasanlage und die Brennkraftmaschine 1 unter Berücksichtigung der gemessenen und gespeicherter Parameter steuert bzw. regelt. Dies ist dem zuständigen Fachmann an sich bekannt und aus Vereinfachungsgründen nicht dargestellt.

Im Funktionsbetrieb reduziert die Schwefelfalle 7 den Schwefelgehalt im Abgas, um die Funktion des NOₓ-Speicherkatalysators 12 und gegebenenfalls auch des Partikelfilters 11 sicherzustellen. Eine Regeneration der Schwefelfalle 7 erfolgt durch Motormaßnahmen, d.h. λ<1 Betrieb durch Saugluftandrosselung, Nacheinspritzung oder beispielsweise Änderung der EGR-Rate. In Fällen, in denen ein schwefelfreier oder - armer Kraftstoff zur Verfügung steht, kann die Schwefelfalle 7 weggelassen werden.

Der Oxidationskatalysator 9 reduziert Kohlenmonoxid und Kohlenwasserstoffe. Eine weitere Funktion des Oxidationskatalysators 9 ist die Oxidation von NO zu NO₂, das zu einer Ruß- bzw. Partikelverbrennung im Partikelfilter 11 führt ( Continously Regenerating Trap) und im NOₓ-Speicherkatalysator 12 besser gespeichert werden kann als NO. Eine Regeneration des NOₓ-Speicherkatalysators 12 erfolgt durch eine Verringerung des Kraftstoff/Luft-Verhältnises, insbesondere eine Androsselung der Brennkraftmaschine 1 (λ < 1) im Sinne einer Verringerung der Ansaugluftmenge an der Drosselklappe 21 in der Luftansaugleitung 3 und/oder Nacheinspritzung.

Die Funktion der Schwefelfalle 7, des NOx-Speicherkatalysators 12 und der Steuereinrichtung sind so ausgebildet, das die Regeneration der Schwefelfalle 7 unter gleichen Bedingungen (Temperatur, Abgaszusammensetzung) wie die Regeneration des NOₓ-Speicherkatalysators 12 erfolgen kann.

Die Regenerationsvorgänge werden über in der Steuereinrichtung gespeicherte Algorithmen unter Berücksichtigung der Meßsignale der Lambdasonde 8 und des NOₓ-Sensors 13 gesteuert und geregelt.

Die Funktionsüberwachung (OBD) erfolgt mit dem NOₓ-Sensor 13.

Beim Beispiel nach Fig. 2, bei dem gleiche oder vergleichbare Teile mit gleichen Bezugszeichen versehen sind, sind der NOₓ-Speicherkatalysator 12 und ein Reduktionskatalysator 22, der vorzugsweise durch einen 3-Wege-Katalysator gebildet ist, in der Strömungsrichtung 6 hintereinanderliegend angeordnet und insbesondere zu einer Baueinheit vereinigt, hier in einem Gehäuse 23 angeordnet, so daß das Abgas im Funktionsbetrieb zunächst zum NOₓ-Speicherkatalysator 12 und dann zum Reduktionskatalysator 22 strömt. Es wird eine Bauteileinsparung und eine vorteilhaft kleine Bauweise erreicht, wenn die vorgenannten Katalysatoren 12, 22 durch eine multifunktionelle Beschichtung an einer Matrix gebildet sind. Es kann im eingangsseitigen Bereich eine dem NOₓ-Speicherkatalysator 12 entsprechende Beschichtung vorgesehen sein und im ausgangsseitigen Bereich eine dem Reduktionskatalysator 22 entsprechende Beschichtung vorgesehen sein.

Das Ausführungsbeispiel nach Fig. 3, bei dem ebenfalls gleiche oder vergleichbare Teile mit gleichen Bezugszeichen versehen sind, unterscheidet sich vom Ausführungsbeispiel nach Fig. 2 dadurch, daß zusätzlich der Partikelfilter 11 mit dem NOₓ-Speicherkatalysator 12 und dem Reduktionskatalysator 22 in vorbeschriebener Weise eine Baueinheit in einem Gehäuse 23 bilden. Hierbei können jeweils eine dem NOₓ-Katalysator 12 entsprechende Beschichtung und eine dem Reduktionskatalysator 22 entsprechende Beschichtung hintereinanderliegend oder als zweifache Beschichtung oder als multifunktionale Beschichtung vorgesehen sein.

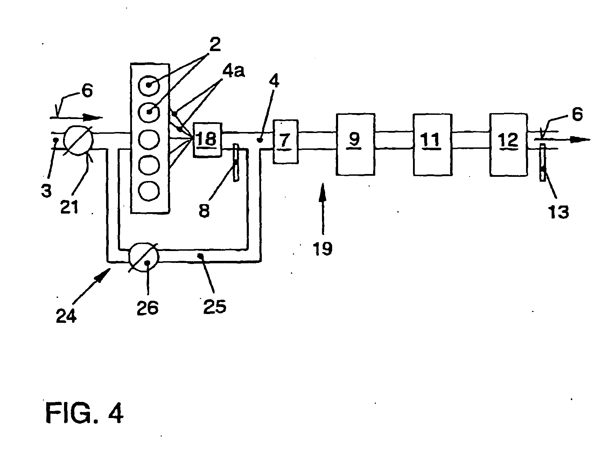

Der Einsatz des NOx-Speicherkatalysators 12 ist optional. Im Rahmen der Erfindung ist es möglich, den NOₓ-Speicherkatalysator 12 wegfallen zu lassen und eine an sich bekannte Abgasrückführvorrichtung 24 vorzusehen, die eine die Brennkraftmaschine 1 umgehende Rückführleitung 25 aufweist, die von der Abgasleitung 4, z.B. direkt hinter dem Abgasturbolader 18, abzweigt und in der Strömungsrichtung 6 vor der Brennkraftmaschine 1 mit der Luftansaugleitung 3 verbunden ist und zwar in der Strömungsrichtung 6 hinter der Drosselklappe 21 in der Luftansaugleitung 3, so daß die Verbrennungsluft im Funktionsbetrieb zunächst zur Drosselklappe 21 und dann zu der Mündung der Rückführleitung 25 und zu den Zylindern 2 gelangt In der Rückführleitung 25 ist ein verstellbares Abgas-Rückführventil 26 angeordnet, mit dem die Menge des rückführbaren Abgases einstellbar ist, was durch die Steuereinrichtung erfolgt. Eine solche abgewandelte Abgasanlage und Brennkraftmaschine 1 ist in der Fig. 4 dargestellt, in der gleiche oder vergleichbare Teile mit gleichen Bezugszeichen versehen sind. Wenn die NOₓ-Emissionen durch eine Erhöhung der Abgas-Rückführrate bis auf einen gewünschten Wert reduziert werden können, kann der NOₓ-Speicherkatalysator 12 wegfallen, wie es Fig. 4 zeigt. Erhöhte Partikelemissionen werden durch den Partikelfilter 11 aufgefangen.

### BEZUGSZEICHENLISTE

- 1: Brennkraftmaschine
- 2: Zylinder
- 3: Luftansaugleitung
- 4: Abgasleitung
- 4a: Zweigleitungsabschnitte
- 5: Kraftstoff-Einspritzvorrichtung
- 6: Strömungsrichtung
- 7: Schwefelfalle
- 8: Lambda-Sonde
- 9: Oxidationskatalysator
- 11: Partikelfilter
- 12: NOₓ-Speicherkatalysator
- 13: NOₓ-Sensor
- 14: Gehäuse
- 15: Gehäuse
- 16: Gehäuse
- 17: Gehäuse
- 18: Abgasturbolader
- 19: Abgasanlage
- 21: Drosselklappe
- 22: 3-Wege-Katalysator
- 23: Gehäuse
- 24: Abgasrückführvorrichtung
- 25: Rückführleitung
- 26: Abgasrückführventil

## Patentansprüche

1. Vorrichtung zum Reduzieren von schädlichen Bestandteilen im Abgas einer Brennkraftmaschine (1), insbesondere einer Diesel-Brennkraftmaschine, mit einer Abgasleitung (4), in der in der Strömungsrichtung (6) hintereinander zunächst ein Oxidationskatalysator (9) und dann ein Partikelfilter (11) zum Filtern von im Abgas enthaltenen Partikeln sowie ein NOₓ-Speicherkatalysator (12) angeordnet sind, **dadurch gekennzeichnet, dass** der Vorrichtung eine Abgasrückführvorrichtung (24) mit einer die Zylinder (2) der Brennkraftmaschine (1) umgehenden Rückführleitung (25) mit einstellbarem Abgasrückführventil (26) zugeordnet ist, wobei die Rückführleitung (25) direkt hinter dem Abgasturbolader (18) von der Abgasleitung (4) abzweigend angeordnet ist und in der Strömungsrichtung (6) vor der Brennkraftmaschine (1) mit einer Luftansaugleitung (3) verbunden ist.

2. Vorrichtung nach Anspruch 1, **dadurch gekennzeichnet, dass** in der Abgasleitung (4) in der Strömungsrichtung (6) vor dem Oxidationskatalysator (9) eine Schwefelfalle (7) angeordnet ist.

3. Vorrichtung nach Anspruch 2, **dadurch gekennzeichnet, dass** eine Lambda-Sonde (8) in der Strömungsrichtung (6) vor der Schwefelfalle (7) angeordnet ist.

4. Vorrichtung nach einem der vorherigen Ansprüche, **dadurch gekennzeichnet, dass** die Schwefelfalle (7) und der NOₓ-Speicherkatalysator (12) gleiche Regenerationsbedingungen ausweisen.

5. Vorrichtung nach einem der Ansprüche 2 bis 4, **dadurch gekennzeichnet, dass** der NOₓ-Sensor (13) hinter dem Partikelfilter (11) angeordnet ist.

6. Vorrichtung nach Anspruch 5, **dadurch gekennzeichnet, dass** der NOₓ Sensor (13) hinter dem NOₓ-Speicherkatalysator (12) angeordnet ist.

7. Vorrichtung nach einem der vorherigen Ansprüche, **dadurch gekennzeichnet, dass** in der Strömungsrichtung (6) hinter dem NOₓ-Speicherkatalysator (12) ein Reduktionskatalysator (22) angeordnet ist.

## Claims

1. Device for reducing harmful constituents in the exhaust gas of an internal combustion engine (1), in particular of a diesel internal combustion engine, having an exhaust line (4) in which initially an oxidation catalytic converter (9) and then a particulate filter (11) for filtering particulates contained in the exhaust gas and a NOₓ storage catalytic converter (12) are arranged in series as seen in the flow direction (6), **characterized in that** the device is assigned an exhaust gas recirculation device (24) which has a recirculation line (25) which bypasses the cylinders (2) of the internal combustion engine (1) and has an adjustable exhaust gas recirculation valve (26), with the recirculation line (25) being arranged so as to branch off directly downstream of the exhaust gas turbocharger (18), and being connected to an air intake line (3) upstream of the internal combustion engine (1) as seen in the flow direction (6).

2. Device according to Claim 1, **characterized in that** a sulphur trap (7) is arranged in the exhaust gas line (4) upstream of the oxidation catalytic converter (9) as seen in the flow direction (6).

3. Device according to Claim 2, **characterized in that** a lambda sensor (8) is arranged upstream of the sulphur trap (7) as seen in the flow direction (6).

4. Device according to one of the preceding claims, **characterized in that** the sulphur trap (7) and the NOₓ storage catalytic converter (12) have the same regeneration conditions.

5. Device according to one of claims 2 to 4, **characterized in that** the NOₓ sensor (13) is arranged downstream of the particulate filter (11).

6. Device according to Claim 5, **characterized in that** the NOₓ sensor (13) is arranged downstream of the NOₓ storage catalytic converter (12).

7. Device according to one of the preceding claims, **characterized in that** a reduction catalytic converter (22) is arranged downstream of the NOₓ storage catalytic converter (12) as seen in the flow direction (6).

## Revendications

1. Dispositif pour réduire la quantité de composants nocifs présents dans les gaz d'échappement d'un moteur à combustion interne (1), en particulier d'un moteur Diesel, avec une conduite d'échappement (4) dans laquelle sont disposés, en succession dans la direction d'écoulement (6), d'abord un catalyseur à oxydation (9) puis un filtre à particules (11) pour filtrer les particules contenues dans les gaz d'échappement ainsi qu'un catalyseur-accumulateur de NOₓ (12), **caractérisé en ce qu'**un dispositif (24) de recyclage des gaz d'échappement, doté d'une conduite de recyclage (25) contournant les cylindres (2) du moteur à combustion interne (1) et pourvue d'une soupape réglable (26) de recyclage des gaz d'échappement, est associé au dispositif, sachant que la conduite de recyclage (25) part en dérivation de la conduite d'échappement (4) juste après le turbocompresseur (18) et est reliée, avant le moteur à combustion interne (1) dans la direction d'écoulement (6), à une conduite (3) d'aspiration d'air.

2. Dispositif selon la revendication 1, **caractérisé en ce qu'**un piège à soufre (7) est disposé dans la conduite d'échappement (4) avant le catalyseur à oxydation (9) dans la direction d'écoulement (6).

3. Dispositif selon la revendication 2, **caractérisé en ce qu'**une sonde lambda (8) est disposée avant le piège à soufre (7) dans la direction d'écoulement (6).

4. Dispositif selon l'une quelconque des revendications précédentes, **caractérisé en ce que** le piège à soufre (7) et le catalyseur-accumulateur de NOₓ (12) présentent des conditions de régénération identiques.

5. Dispositif selon l'une quelconque des revendications 2 à 4, **caractérisé en ce que** le capteur de NOₓ (13) est disposé après le filtre à particules (11).

6. Dispositif selon la revendication 5, **caractérisé en ce que** le capteur de NOₓ (13) est disposé après le catalyseur-accumulateur de NOₓ (12).

7. Dispositif selon l'une quelconque des revendications précédentes, **caractérisé en ce qu'**un catalyseur de réduction (22) est disposé après le catalyseur-accumulateur de NOₓ (12) dans la direction d'écoulement (6).
